# EUROPEAN PATENT SPECIFICATION

(11) **EP 3 306 209 B1**
(45) Date of publication and mention of the grant of the patent: **18.11.2020**
(21) Application number: 15894122.9
(22) Date of filing: 29.05.2015
(51) Int. Cl.: B01D 46/10, F24F 13/28, F24F 3/16, F24F 12/00

(54) **HEAT EXCHANGE-TYPE VENTILATION DEVICE**
WÄRMETAUSCHARTIGE BELÜFTUNGSVORRICHTUNG
DISPOSITIF DE VENTILATION DE TYPE À ÉCHANGE DE CHALEUR

(43) Date of publication of application: 11.04.2018
(73) Proprietor: Mitsubishi Electric Corporation, Chiyoda-ku Tokyo 100-8310 (JP)
(72) Inventor: AOKI, Hiroki, Tokyo 100-8310 (JP); MIYAZAKI, Yuki, Tokyo 100-8310 (JP); FUJII, Yoshinori, Tokyo 102-0073 (JP); KATO, Shinya, Tokyo 102-0073 (JP)
(74) Representative: Pfenning, Meinig & Partner mbB
(86) International application number: PCT/JP2015/065679
(87) International publication number: WO 2016/194087

(56) References cited:
- EP-A2- 0 769 664
- WO-A1-2010/095237
- WO-A1-2010/125632
- WO-A1-2010/125632
- GB-A- 2 179 437
- JP-A- 2006 038 449
- JP-A- 2012 145 321
- JP-A- 2012 145 321
- JP-U- S5 348 461
- JP-U- S63 132 228
- KR-A- 20070 019 279
- US-B1- 6 223 547

## Description

### Field

The present invention relates to a heat-exchange type ventilation apparatus that provides ventilation while allowing heat exchange between a supply airflow and a discharge airflow.

### Background

It is conventional to use a heat-exchange type ventilation apparatus that includes a main body having a supply air path and a discharge air path formed therein and a heat exchanger placed inside the main body and that provides ventilation while allowing heat exchange between air passing through the supply air path and air passing through the discharge air path. In Patent Literature 1, an air supplying fan is placed in the supply air path and an air discharging fan is placed in the discharge air path. GB 2 179 437 discloses a ventilator comprising an air intake passage, an air discharge passage, an air intake fan set in the air intake passage, an air discharge fan in the air discharge passage, and a stacking heat exchanger through both passages pass. The air intake fan and the air discharge fan are next to each other in a direction perpendicular to a stacking direction of the heat exchanger.

### Citation List

### Patent Literature

Patent Literature 1: Japanese Patent Application Laid-Open No. S62-019634

### Summary

### Technical Problem

In a heat-exchange type ventilation apparatus disclosed in Patent Literature 1, the air supplying fan and the air discharging fan are placed one above the other, and thus, there is a problem in that the apparatus is increased in size in the height direction.

The present invention has been achieved in view of the above, and an object of the present invention is to provide a heat-exchange type ventilation apparatus that is reduced in size in the height direction.

### Solution to Problem

In order to solve the above problems and achieve the object, the present invention is a heat-exchange type ventilation apparatus according to claim 1.

### Advantageous Effects of Invention

A heat-exchange type ventilation apparatus according to the present invention produces an effect of enabling a reduction of its size in the height direction.

### Brief Description of Drawings

FIG. 1 is an exploded perspective view of a heat-exchange type ventilation apparatus according to a first embodiment of the present invention as viewed from the top surface side.
FIG. 2 is an exploded perspective view of the heat-exchange type ventilation apparatus according to the first embodiment as viewed from the bottom surface side.
FIG. 3 is a plan view of the heat-exchange type ventilation apparatus according to the first embodiment.
FIG. 4 is a cross-sectional view of the heat-exchange type ventilation apparatus according to the first embodiment as viewed from the side thereof.
FIG. 5 is a perspective view of a heat exchanger according to the first embodiment.
FIG. 6 is an exploded perspective view of the heat exchanger according to the first embodiment.
FIG. 7 is a partially enlarged cross-sectional view of a corner portion of the heat exchanger according to the first embodiment.
FIG. 8 is a perspective view of a supply air filter frame included in a supply air filter and a discharge air filter frame included in a discharge air filter.
FIG. 9 is a partially enlarged perspective view of the supply air filter frame.
FIG. 10 is a partially enlarged cross-sectional view of a corner portion of the heat exchanger accommodated in a housing in the heat-exchange type ventilation apparatus according to the first embodiment.
FIG. 11 is a partially enlarged cross-sectional view of a corner portion of the heat exchanger accommodated in the housing in the heat-exchange type ventilation apparatus according to the first embodiment.

### Description of Embodiments

A heat-exchange type ventilation apparatus according to embodiments of the present invention will now be described in detail with reference to the drawings. The present invention is not limited to the embodiments.

### First embodiment.

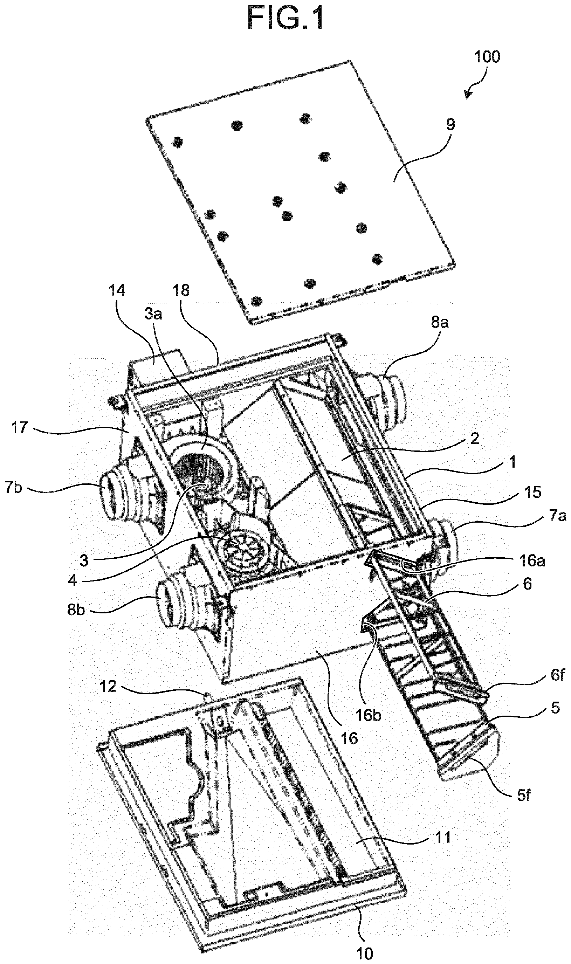

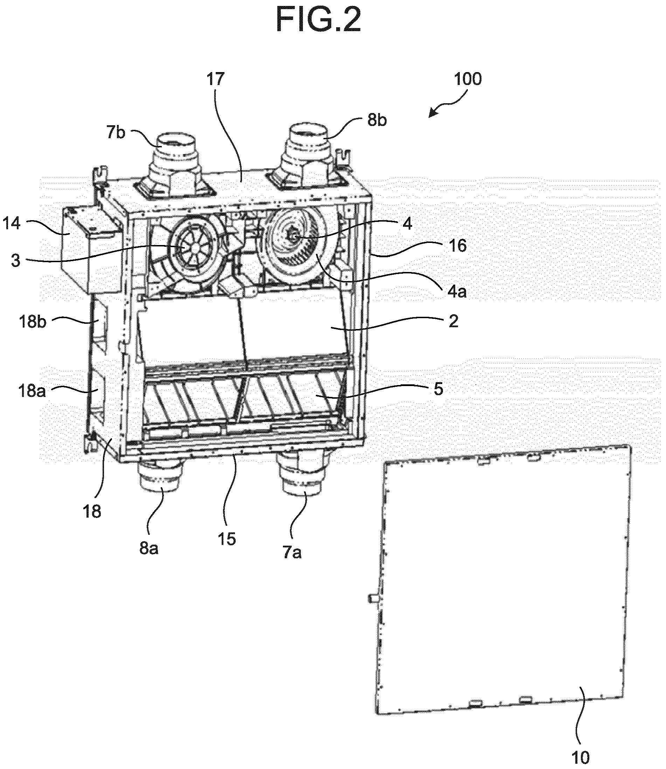

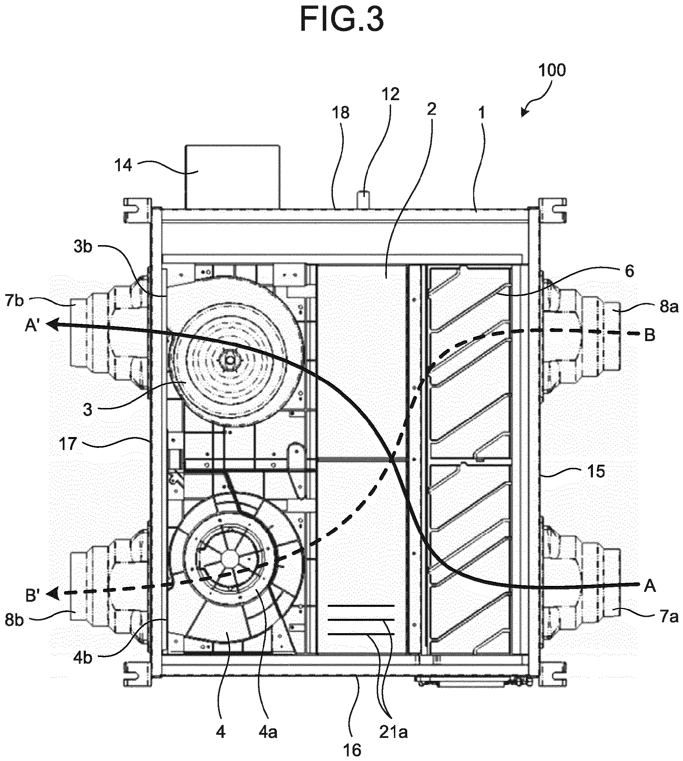

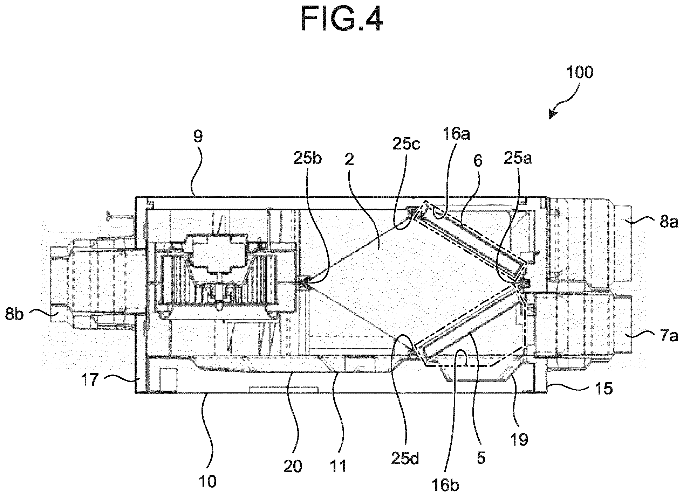

FIG. 1 is an exploded perspective view of a heat-exchange type ventilation apparatus according to a first embodiment of the present invention as viewed from the top surface side. FIG. 2 is an exploded perspective view of the heat-exchange type ventilation apparatus according to the first embodiment as viewed from the bottom surface side. FIG. 3 is a plan view of the heat-exchange type ventilation apparatus according to the first embodiment. FIG. 4 is a cross-sectional view of the heat-exchange type ventilation apparatus according to the first embodiment as viewed from the side thereof.

A heat-exchange type ventilation apparatus 100 according to the present embodiment includes a housing 1, which is a main body; a heat exchanger 2, an air supplying fan 3; an air discharging fan 4; a supply air filter 5; and a discharge air filter 6. The housing 1 includes an exterior-side inlet portion 7a; an interior-side inlet portion 8a; an interior-side outlet portion 7b; and an exterior-side outlet portion 8b formed therein. A supply air path that connects the exterior-side inlet portion 7a and the interior-side outlet portion 7b is formed in the housing 1. A discharge air path that connects the interior-side inlet portion 8a and the exterior-side outlet portion 8b is also formed in the housing 1.

The air supplying fan 3 is placed in the supply air path. The air supplying fan 3 generates a supply airflow that causes outside air (supply air) that is admitted through the exterior-side inlet portion 7a into the supply air path to flow out through the interior-side outlet portion 7b.

The air discharging fan 4 is placed in the discharge air path. The air discharging fan 4 generates a discharge airflow that causes inside air (discharge air) that is admitted through the interior-side inlet portion 8a into the discharge air path to flow out through the exterior-side outlet portion 8b.

The heat exchanger 2 is placed at the intersection portion of the supply air path and the discharge air path in the housing 1 and allows heat exchange between the supply airflow and the discharge airflow. The heat-exchange type ventilation apparatus 100 is a ventilation apparatus that provides ventilation while allowing heat exchange between the supply airflow and the discharge airflow.

The housing 1 includes six surfaces, i.e., a top plate 9, a bottom plate 10 opposite the top plate 9, and four side plates 15 to 18 closing the spaces between the top plate 9 and the bottom plate 10. The side plate 15 includes the exterior-side inlet portion 7a and the interior-side inlet portion 8a placed therein. The side plate 17, which is opposite the side plate 15, includes the interior-side outlet portion 7b and the exterior-side outlet portion 8b placed therein. In this case, the path passing from the exterior-side inlet portion 7a through the heat exchanger 2 to the air supplying fan 3 is the supply air path A-A', and the path passing from the interior-side inlet portion 8a through the heat exchanger 2 to the air discharging fan 4 is the discharge air path B-B'.

A control circuit 14 is attached to the side plate 18. The side plate 18 has an opening 18a and an opening 18b, which can be used as ports to admit air into the discharge air path B-B', in addition to the interior-side inlet portion 8a. The opening 18a is connected upstream of the heat exchanger 2 and thus the air admitted from the opening 18a is discharged through the heat exchanger 2. The opening 18b is connected downstream of the heat exchanger 2 and thus the air admitted from the opening 18b is discharged without going through the heat exchanger 2. By discharging without going through the heat exchanger 2, it is possible to reduce the pressure loss needed for the air to pass through the heat exchanger 2 although heat exchange is not performed. In this manner, the load on the air discharging fan 4 can be reduced and thereby the power consumption can be reduced. The side plate 16, which is opposite the side plate 18, has openings 16a and 16b, which are insertion apertures. The supply air filter 5 and the discharge air filter 6 can be inserted into the housing 1 through the openings 16a and 16b. Because maintenance can be performed on both of the supply air filter 5 and the discharge air filter 6 from one direction of the side plate 16, ease of cleaning can be improved.

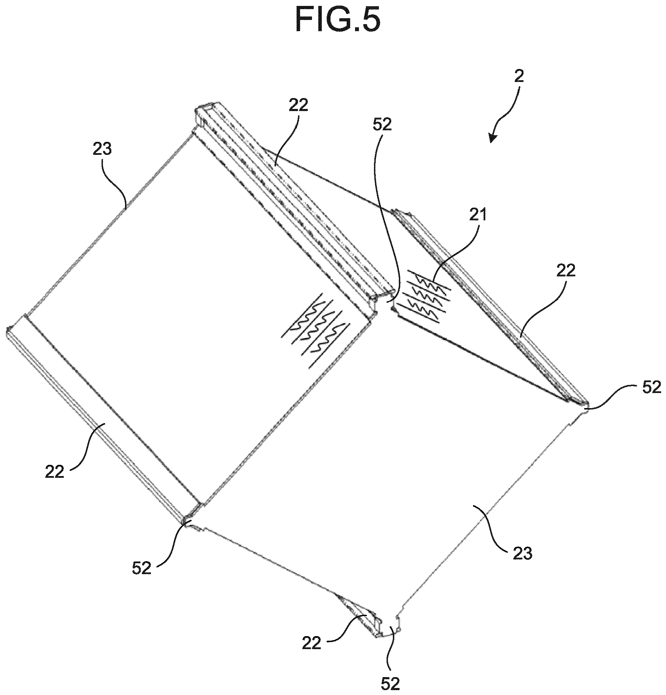

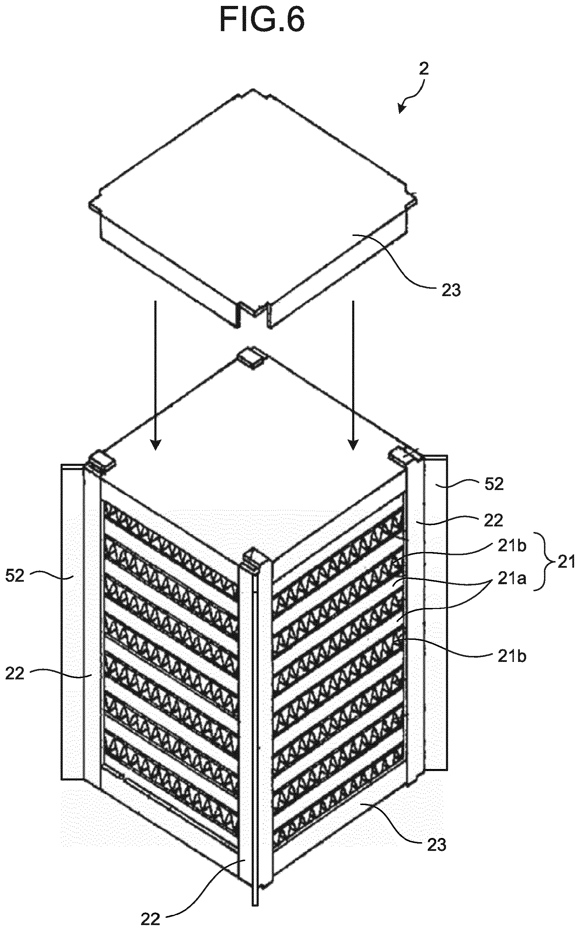

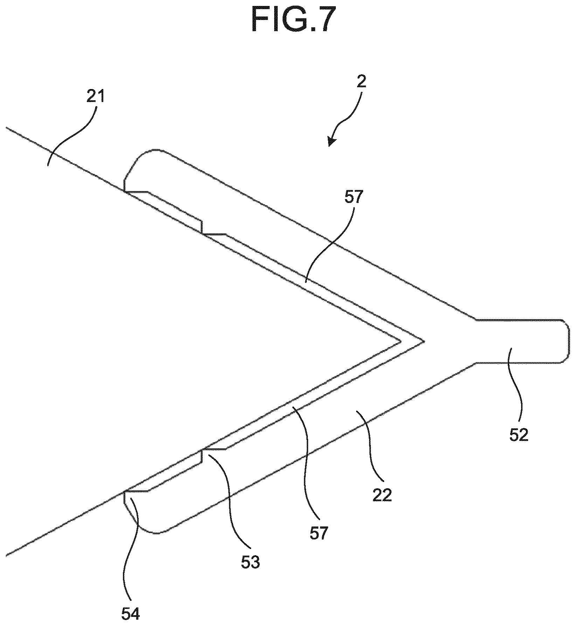

FIG. 5 is a perspective view of the heat exchanger 2 according to the first embodiment. FIG. 6 is an exploded perspective view of the heat exchanger 2 according to the first embodiment. FIG. 7 is a partially enlarged cross-sectional view of a corner portion of the heat exchanger 2 according to the first embodiment.

The heat exchanger 2 includes a heat exchange element 21, frame members 22, and end face members 23. The heat exchange element 21 is formed, for example, by alternately stacking partition members 21a, each of which is made from paper and has a sheet-like and polygonal shape, and spacing members 21b, each of which is made from paper and has a wave-like shape. In the present embodiment, the partition members 21a and the spacing members 21b have a square shape as viewed from the stacking direction of the partition members 21a, and thus, the heat exchange element 21 formed by stacking these members has a cuboid shape. The stacking direction of the partition members 21a is simply referred to as the stacking direction in the description hereinafter.

Spaces between the partition members 21a, which are spaced by the spacing members 21b, provide flow paths through which air can pass. By causing the supply airflow to pass through a flow path on one side of each of the partition members 21a and causing the discharge airflow to pass through a flow path on the other side thereof, the heat exchange element 21 can perform total heat exchange, sensible heat exchange, or latent heat exchange between the supply airflow and the discharge airflow via each of the partition members 21a. Use of paper for the partition members 21a and the spacing members 21b enables a reduction in material cost. Additionally, condensate generated when the heat exchange is performed is retained in the partition members 21a and the spacing members 21b, which are made from paper; therefore, blockage of the flow paths due to formation of ice can be reduced. The edges of the heat exchange element 21 that extend in the stacking direction are each covered by the frame member 22.

The frame members 22 cover the edges of the heat exchange element 21 that extend in the stacking direction. As illustrated in FIGS. 5 and 7, each of the frame members 22 has an L-like shape in a section and faces two of the side surfaces of the heat exchange element 21 that extend from the edges of the heat exchange element 21. The surface of each frame member 22 opposite the surface thereof that faces the heat exchange element 21 has an outer protrusion 52 formed thereon that extends in the stacking direction.

The surface of each frame member 22 that faces the heat exchange element 21 has inner protrusions 53 and 54 formed thereon that extend in the stacking direction. The inner protrusion 53 and the inner protrusion 54 are formed on the surface of each frame member 22 that faces one of the surfaces of the heat exchange element 21 and they are spaced apart from each other in a direction perpendicular to the stacking direction. Because each frame member 22 faces two of the surfaces of the heat exchange element 21, two each of the inner protrusions 53 and the inner protrusions 54 are formed on each frame member 22. The inner protrusions 53 and 54 abut on the side surfaces of the heat exchange element 21 or dig into the side surfaces of the heat exchange element 21.

As illustrated in FIG. 6, the end face members 23 cover the end surfaces of the heat exchange element 21 in the stacking direction. The end face members 23 are elastic bodies having airtightness to prevent air from leaking from the heat exchange element 21 to the end surface sides. Each of the end face members 23 is an airtight gasket having a thickness and thus air is prevented from leaking with ease even when the heat exchanger 2 has contracted.

With reference back to FIGS. 1 to 4, the bottom plate 10 includes a drain pan 11 on the inner surface side, and the drain pan 11 includes a drain port 12. The drain pan 11 includes a supply-air-side drain pan 19 to retain water resulting from condensation, due to the heat exchanger 2 or the like, of moisture contained in the air admitted through the exterior-side inlet portion 7a. The drain pan 11 also includes a discharge-air-side drain pan 20 to retain water such as condensate generated when the heat exchanger 2 performs heat exchange between air admitted through the interior-side inlet portion 8a and air admitted through the exterior-side inlet portion 7a. The discharge-air-side drain pan 20 is in communication with the drain port 12; therefore, drain water can be discharged. If the amount of water retained in the supply-air-side drain pan 19 is large, a water path may be included to achieve passage to the discharge-air-side drain pan 20.

The heat exchanger 2 is inserted into the housing 1 through an opening generated by removing the drain pan 11. The heat exchanger 2 is placed in the housing 1 such that one edge of the heat exchanger 2 that extends in the stacking direction and the diagonally opposite edge of the heat exchanger 2 are lined up vertically. By placing the heat exchanger 2 in such a manner, the area of heat exchange of the heat exchanger 2 can be used effectively and thereby an enhancement in thermal exchange efficiency can be achieved.

The housing 1 has support recess portions 25a to 25d formed therein to support the heat exchanger 2. The support recess portions 25a to 25d are grooves that extend in the stacking direction of the partition members 21a as placed in the housing 1.

The air supplying fan 3 and the air discharging fan 4 are placed on one side of the heat exchanger 2. The positions of the air supplying fan 3 and the air discharging fan 4 are downstream of the heat exchanger 2 in their respective paths. The air supplying fan 3 and the air discharging fan 4 are placed in the housing 1 next to each other in the stacking direction of the partition members 21a such that their inlet ports 3a and 4a are oriented in opposite directions to each other and their outlet ports 3b and 4b are oriented in the same direction. This placement can reduce the housing 1 in size in the height direction.

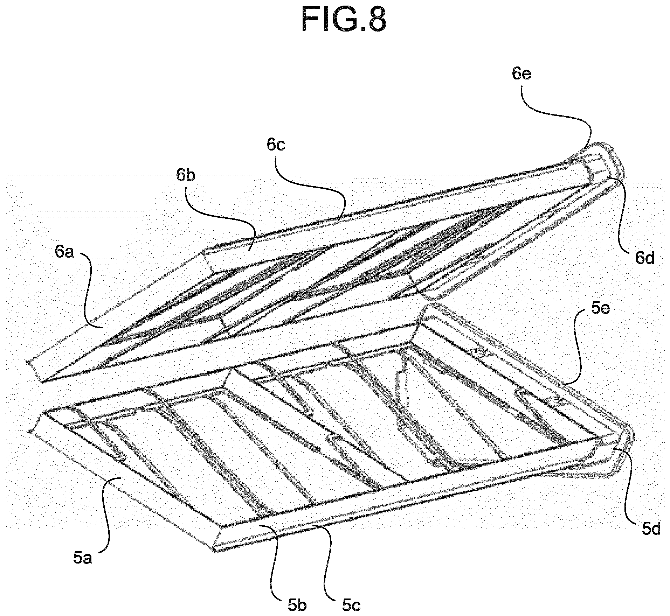

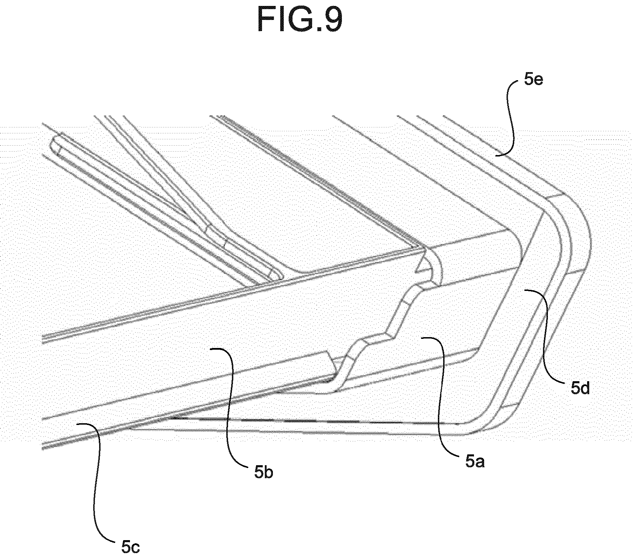

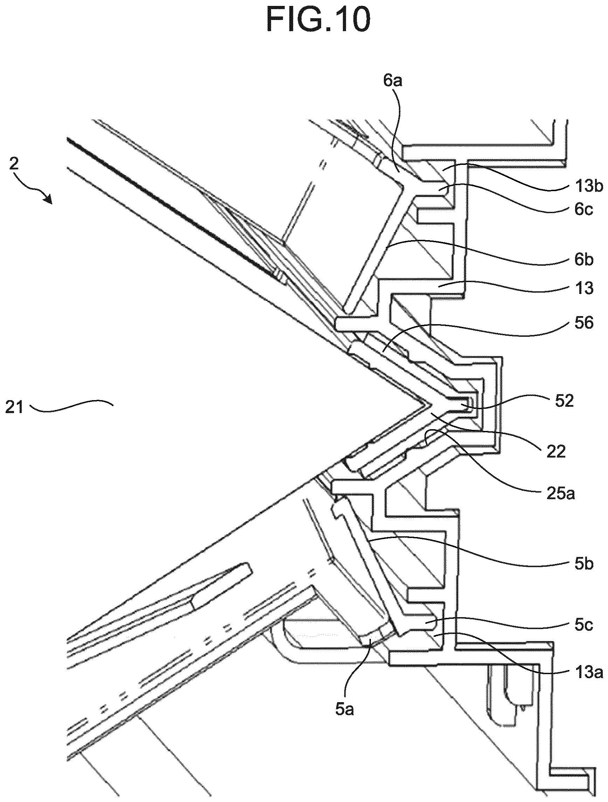

FIG. 8 is a perspective view of a supply air filter frame 5a included in the supply air filter 5 and a discharge air filter frame 6a included in the discharge air filter 6. The supply air filter 5 and the discharge air filter 6 include the supply air filter frame 5a and the discharge air filter frame 6a, which retain the filters formed from a nonwoven fabric or the like. FIG. 9 is a partially enlarged perspective view of the supply air filter frame 5a. FIG. 10 is a partially enlarged cross-sectional view of a corner portion of the heat exchanger 2 accommodated in the housing 1 in the heat-exchange type ventilation apparatus 100 according to the first embodiment.

The supply air filter 5 is inserted into the housing 1 through the opening 16b, which is formed in the housing 1, to abut on the surface of the heat exchanger 2 that is located on the upstream side in the supply air path. The discharge air filter 6 is inserted into the housing 1 through the opening 16a, which is formed in the housing 1, to abut on the surface of the heat exchanger 2 that is located on the upstream side in the discharge air path.

A rib frame body 13 that supports the supply air filter 5 and the discharge air filter 6 is formed in the housing 1. A facing surface 5b of the supply air filter frame 5a that faces the rib frame body 13 has a frame protrusion 5c that extends in the stacking direction formed thereon. A facing surface 6b of the discharge air filter frame 6a that faces the rib frame body 13 has a frame protrusion 6c that extends in the stacking direction formed thereon.

The support recess portion 25a is formed in the rib frame body 13. The outer protrusion 52 formed on one of the frame members 22 of the heat exchanger 2 is fitted in the support recess portion 25a. The heat exchanger 2 is positioned in the housing 1 when the outer protrusion 52 is fitted in the support recess portion 25a. As illustrated in FIG. 10, a seal material 56 may be interposed between the support recess portion 25a and the outer protrusion 52.

The rib frame body 13 has filter-frame guide recess portions 13a and 13b that extend in the stacking direction formed therein such that the support recess portion 25a is located between the filter-frame guide recess portions 13a and 13b. As illustrated in FIG. 10, the frame protrusion 5c, which is formed on the supply air filter frame 5a, and the frame protrusion 6c, which is formed on the discharge air filter frame 6a, are fitted in the filter-frame guide recess portions 13a and 13b, respectively. By fitting the frame protrusions 5c and 6c in the filter-frame guide recess portions 13a and 13b and sliding the supply air filter 5 and the discharge air filter 6, insertion and removal of the supply air filter 5 and the discharge air filter 6 in the stacking direction is guided. In this way, the supply air filter 5 and the discharge air filter 6 can be inserted and removed stably. Additionally, the supply air filter 5 and the discharge air filter 6 are positioned in the housing 1 when the frame protrusions 5c and 6c are fitted in the filter-frame guide recess portions 13a and 13b.

As illustrated in FIGS. 8 and 9, the supply air filter frame 5a and the discharge air filter frame 6a respectively include a supply-air-filter sealing surface portion 5d and a discharge-air-filter sealing surface portion 6d to provide sealing between the supply air filter frame 5a and the discharge air filter frame 6a and the side plate 16 of the housing 1. As illustrated in FIGS. 8 and 9, in order to further improve the airtightness, the supply-air-filter sealing surface portion 5d has a rib-like protrusion 5e and the discharge-air-filter sealing surface portion 6d has a protrusion 6e. As illustrated in FIG. 1, a supply-air filter grip 5f and a discharge-air filter grip 6f that serve as parts to be held when the filters 5 and 6 are inserted and removed are included.

The opening 16b, which is formed in the side plate 16, has an enlarged opening portion so that insects and dust to be collected in the housing 1 can be cleaned from the housing 1. As illustrated in FIG. 1, the supply-air-filter sealing surface portion 5d has such a trapezoidal shape as to fit the shape of the opening 16b.

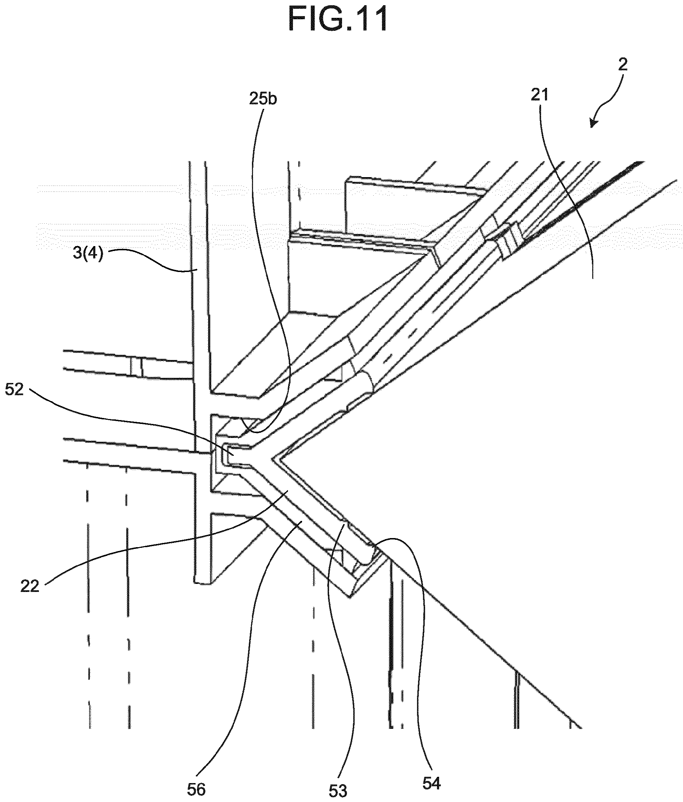

FIG. 11 is a partially enlarged cross-sectional view of a corner portion of the heat exchanger 2 accommodated in the housing 1 in the heat-exchange type ventilation apparatus 100 according to the first embodiment. In FIG. 11, the corner portion of the heat exchanger 2 on the side of the air supplying fan 3 and the air discharging fan 4 in the housing 1 is enlarged. The support recess portion 25b is formed in the casings of the air supplying fan 3 and the air discharging fan 4. The outer protrusion 52 formed on one of the frame members 22 of the heat exchanger 2 is fitted in the support recess portion 25b. The heat exchanger 2 is positioned in the housing 1 when the outer protrusion 52 is fitted in the support recess portion 25b. As illustrated in FIG. 11, the seal material 56 may be interposed between the support recess portion 25b and the outer protrusion 52. If a partition wall is placed between the air supplying fan 3 and the air discharging fan 4, and the heat exchanger 2, the support recess portion 25b may be formed in the partition wall.

The support recess portion 25c is formed on the top plate 9 side of the heat exchanger 2 in the housing 1, for example, in the top plate 9, although detailed illustration is omitted. The support recess portion 25d is formed on the bottom plate 10 side of the heat exchanger 2 in the housing 1, for example, in the drain pan 11. As in the case with the support recess portions 25a and 25b, the outer protrusions 52 of the frame members 22 are fitted in the support recess portions 25c and 25d. Additionally, the seal material 56 may be interposed between the support recess portion 25c and the corresponding one of the outer protrusions 52 and between the support recess portion 25d and the corresponding one of the outer protrusions 52.

In the heat-exchange type ventilation apparatus 100 described above, the inner protrusions 53 and 54, which are formed on the frame members 22, are in line contact with the heat exchange element 21; thus, this is less likely to form a gap than a case in which the frame members 22 are in surface contact with the heat exchange element 21, and thereby airtightness can be improved. Additionally, by interposing a seal material 57 in a gap between each of the frame members 22 and the heat exchange element 21, airtightness can be further improved.

Furthermore, the inner protrusions 53 and 54 can be used as marks indicative of an application area over which the seal material 57 is applied. Additionally, the inner protrusions 53 and 54 can be used as walls to prevent the seal material 57 from leaking from the gap between each of the frame members 22 and the heat exchange element 21. In particular, the inner protrusions 54, which are placed on the end portion sides of the inner protrusions 53 on each of the frame members 22, tend to function as walls to prevent the seal material 57 from leaking. By forming the inner protrusions 54 as end-portion-side protrusions on the end portions of each of the frame members 22, the inner protrusions 54 can function as walls to prevent the leaking more reliably. The number of inner protrusions formed on the surface of each frame member 22 that faces one of the surfaces of the heat exchange element 21 may be one, or may be three or more.

Additionally, the fitting structure in which the outer protrusions 52 of the frame members 22 are fitted in the support recess portions 25a to 25d can achieve an improvement in airtightness between the heat exchanger 2 and the housing 1. Furthermore, even when the heat exchanger 2 has contracted due to deterioration over time, the airtightness between the heat exchanger 2 and the housing 1 is maintained as long as the outer protrusions 52 are fitted in the support recess portions 25a to 25d. That is, even when the heat exchanger 2 has contracted, the airtightness is maintained with ease. Moreover, even when the dimensions of the heat exchanger 2 vary due to manufacturing errors, the airtightness between the heat exchanger 2 and the housing 1 is maintained as long as the degree of variation is such that the outer protrusions 52 are allowed to be fitted in the support recess portions 25a to 25d. Moreover, by interposing the seal material 56 between the outer protrusions 52 and the support recess portions 25a to 25d, the airtightness is maintained further reliably when the heat exchanger 2 has contracted. Furthermore, when the outer protrusions 52 are fitted in the support recess portions 25a to 25d in greater depths, the airtightness can be maintained even when the heat exchanger 2 has a greater contraction.

Furthermore, as long as the outer protrusions 52 are fitted in the support recess portions 25a to 25d, shifting in position of the heat exchanger 2 and falling of the heat exchanger 2 in the housing 1 can be prevented even when the heat exchanger 2 has contracted. Additionally, the frame members 22 reinforce the heat exchanger 2; thus, the product life can be extended.

Additionally, the frame protrusion 5c, which is formed on the supply air filter frame 5a, and the frame protrusion 6c, which is formed on the discharge air filter frame 6a, are fitted in the filter-frame guide recess portions 13a and 13b; thus, such a fitting structure can achieve an improvement in airtightness between the supply air filter frame 5a and the discharge air filter frame 6a, and the housing 1. In this way, air can be prevented from passing through the supply air path and the discharge air path without going through the supply air filter 5 and the discharge air filter 6.

Note that the configurations described in the foregoing embodiments are examples of the present invention; combining the present invention with other publicly known techniques is possible, and partial omissions and modifications are possible without departing from the scope of the present invention which is defined in the appending claims.

### Reference Signs List

1 housing (main body), 2 heat exchanger, 3 air supplying fan, 4 air discharging fan, 5 supply air filter, 5a supply air filter frame, 5b facing surface, 5c frame protrusion, 5d supply-air-filter sealing surface portion, 5e protrusion, 5f supply-air filter grip, 6 discharge air filter, 6a discharge air filter frame, 6b facing surface, 6c frame protrusion, 6d discharge-air-filter sealing surface portion, 6e protrusion, 6f discharge-air filter grip, 7a exterior-side inlet portion, 7b interior-side outlet portion, 8a interior-side inlet portion, 8b exterior-side outlet portion, 9 top plate, 10 bottom plate, 11 drain pan, 13 rib frame body, 13a, 13b filter-frame guide recess portion, 15 to 18 side plate, 16a, 16b opening (insertion aperture), 19 supply-air-side drain pan, 20 discharge-air-side drain pan, 21 heat exchange element, 21a partition member, 21b spacing member, 22 frame member, 23 end face member, 25a to 25d support recess portion, 52 outer protrusion, 53, 54 inner protrusion, 56, 57 seal material, 100 heat-exchange type ventilation apparatus.

## Claims

1. A heat-exchange type ventilation apparatus (100), comprising:
a housing (1) in which a supply air path and a discharge air path are formed, the supply air path comprising an exterior inlet portion (7a) to admit outside air and an interior outlet portion (7b) to discharge the outside air, the discharge air path comprising an interior inlet portion (8a) to admit inside air and an exterior outlet portion (8b) to discharge the inside air;
a heat exchanger (2) comprising a plurality of partition members (21a) each having a sheet-like and polygonal shape to allow heat exchange between air passing through the supply air path and air passing through the discharge air path, the partition members (21a) being stacked with spacing between the partition members (21a);
an air supplying fan (3) placed in the supply air path on one side of the heat exchanger (2);
an air discharging fan (4) placed in the discharge air path on the one side of the heat exchanger (2),
wherein
the air supplying fan (3) and the air discharging fan (4) are placed next to each other in a stacking direction of the partition members (21a) such that inlet ports (3a, 4a) are oriented in opposite directions to each other and outlet ports (3b, 4b) are oriented in an identical direction;
**characterized in** the ventilation apparatus furthermore comprising:
a supply air filter placed upstream of the heat exchanger in the supply air path; and
a discharge air filter placed upstream of the heat exchanger in the discharge air path, wherein
facing surfaces (5b, 6b) of the supply air filter (5) and the discharge air filter (6) each have a frame protrusion (5c, 6c) extending in the stacking direction of the partition members (21a), the facing surfaces (5b, 6b) facing the housing (1), and
the housing (1) has recess portions (13a, 13b) that the frame protrusions (5c, 6c) are fitted in; and
wherein
the supply air filter (5) and the discharge air filter (6) each have a sealing surface (5d, 6d) facing a side plate (16) of the housing (1), the side plate (16) being perpendicular to the stacking direction and being opposite a side plate (18),
a surface of the sealing surface (5d, 6d) has a grip (5f, 6f), the surface facing the side plate (16), and
an opposite surface of the sealing surface (5d, 6d) has a protrusion (5e, 6e), the opposite surface being opposite the surface facing the side plate (16),
wherein the side plate (18) has an opening (18a) and an opening (18b), which are used as ports to admit air into the discharge air path, wherein the opening (18a) is connected upstream of the heat exchanger (2) and the opening (18b) is connected downstream of the heat exchanger (2) .

2. The heat-exchange type ventilation apparatus (100) according to claim 1, wherein the side plate (16) has an opening (16a, 16b) to allow the supply air filter (5) and the discharge air filter (6) to be inserted and removed.

## Patentansprüche

1. Wärmeaustauschtyp-Belüftungsvorrichtung (100), umfassend:
ein Gehäuse (1), in dem ein Zuluftpfad und ein Abluftpfad ausgebildet sind, wobei der Zuluftpfad einen äußeren Einlassabschnitt (7a) zum Aufnehmen von Außenluft und einen inneren Auslassabschnitt (7b) zum Abgeben der Außenluft umfasst, wobei der Abluftpfad einen inneren Einlassabschnitt (8a) zum Aufnehmen von Innenluft und einen äußeren Auslassabschnitt (8b) zum Abgeben der Innenluft umfasst;
einen Wärmetauscher (2), umfassend eine Vielzahl von Trennelementen (21a), jeweils aufweisend eine blattähnliche und polygonale Form, um Wärmeaustausch zwischen Luft, die den Zuluftpfad passiert, und Luft, die den Abluftpfad passiert, zu ermöglichen, wobei die Trennelemente (21a) mit Beabstandung zwischen den Trennelementen (21a) gestapelt sind;
einen Luftzuführungslüfter (3), der in dem Zuluftpfad auf einer Seite des Wärmetauschers (2) angeordnet ist;
einen Luftabführungslüfter (4), der in dem Abluftpfad auf der einen Seite des Wärmetauschers (2) angeordnet ist, wobei
der Luftzuführungslüfter (3) und der Luftabführungslüfter (4) nebeneinander in einer Stapelrichtung der Trennelemente (21a) angeordnet sind, so dass Einlassöffnungen (3a, 4a) in entgegengesetzten Richtungen zueinander orientiert sind und Auslassöffnungen (3b, 4b) in einer identischen Richtung orientiert sind;
**dadurch gekennzeichnet, dass** die Belüftungsvorrichtung ferner umfasst:
einen Zuluftfilter, der stromaufwärts des Wärmetauschers in dem Zuluftpfad angeordnet ist; und
einen Abluftfilter, der stromaufwärts des Wärmetauschers im Abluftpfad angeordnet ist, wobei
einander zugewandte Oberflächen (5b, 6b) des Zuluftfilters (5) und des Abluftfilters (6) jeweils einen sich in der Stapelrichtung der Trennelemente (21a) erstreckenden Rahmenvorsprung (5c, 6c) aufweisen, wobei die einander zugewandten Oberflächen (5b, 6b) dem Gehäuse (1) zugewandt sind, und
das Gehäuse (1) Ausnehmungsabschnitte (13a, 13b) aufweist, in die die Rahmenvorsprünge (5c, 6c) eingepasst sind; und
wobei,
der Zuluftfilter (5) und der Abluftfilter (6) jeweils eine dichtende Oberfläche (5d, 6d) aufweisen, die einer Seitenplatte (16) des Gehäuses (1) zugewandt ist, wobei die Seitenplatte (16) senkrecht zur Stapelrichtung ist und einer Seitenplatte (18) gegenüberliegt,
eine Oberfläche der dichtenden Oberfläche (5d, 6d) einen Griff (5f, 6f) aufweist, wobei die Oberfläche der Seitenplatte (16) zugewandt ist, und eine gegenüberliegende Oberfläche der dichtenden Oberfläche (5d, 6d) einen Vorsprung (5e, 6e) aufweist, wobei die gegenüberliegende Oberfläche der der Seitenplatte (16) zugewandten Fläche gegenüberliegt,
wobei die Seitenplatte (18) eine Öffnung (18a) und eine Öffnung (18b) aufweist, die als Mündungen zum Aufnehmen von Luft in den Abluftpfad genutzt werden, wobei die Öffnung (18a) stromaufwärts des Wärmetauschers (2) verbunden ist und die Öffnung (18b) stromabwärts des Wärmetauschers (2) verbunden ist.

2. Wärmeaustauschtyp-Belüftungsvorrichtung (100) nach Anspruch 1, wobei die Seitenplatte (16) eine Öffnung (16a, 16b) aufweist, um das Einsetzen und Entfernen des Zuluftfilters (5) und des Abluftfilters (6) zu ermöglichen.

## Revendications

1. Appareil de ventilation de type à échange de chaleur (100) comprenant :
un boîtier (1) dans lequel une trajectoire d'air d'alimentation et une trajectoire d'air de décharge sont formées, la trajectoire d'air d'alimentation comprenant une partie d'entrée extérieure (7a) pour introduire l'air extérieur et une partie de sortie intérieure (7b) pour décharger l'air extérieur, la trajectoire d'air de décharge comprenant une partie d'entrée intérieure (8a) pour introduire l'air intérieur et une partie de sortie extérieure (8b) pour décharger l'air intérieur ;
un échangeur de chaleur (2) comprenant une pluralité d'éléments de séparation (21a) ayant chacun une forme de feuille et une forme polygonale pour permettre l'échange de chaleur entre l'air passant par la trajectoire d'air d'alimentation et l'air passant par la trajectoire d'air de décharge, les éléments de séparation (21a) étant empilés avec un espacement entre les éléments de séparation (21a) ;
un ventilateur d'alimentation en air (3) placé dans la trajectoire d'air d'alimentation d'un côté de l'échangeur de chaleur (2) ;
un ventilateur de décharge d'air (4) placé dans la trajectoire de décharge d'un côté de l'échangeur de chaleur (2),
dans lequel :
le ventilateur d'alimentation en air (3) et le ventilateur de décharge d'air (4) sont placés l'un à côté de l'autre dans une direction d'empilement des éléments de séparation (21a) de sorte que les orifices d'entrée (3a, 4a) sont orientés dans des directions opposées entre eux et les orifices de sortie (3b, 4b) sont orientés dans une direction identique ;
charactérisé par l'appareil de ventilation comprenant en outre :
un filtre d'air d'alimentation placé en amont de l'échangeur de chaleur dans la trajectoire de l'air d'alimentation; et un filtre d'air de décharge placé en amont de l'échangeur de chaleur dans la trajectoire de l'air de décharge, dans lequel
des surfaces en vis-à-vis (5b, 6b) du filtre d'air d'alimentation (5) et du filtre d'air de décharge (6) ont chacune une saillie de bâti (5c, 6c) s'étendant dans la direction d'empilement des éléments de séparation (21a), les surfaces en vis-à-vis (5b, 6b) faisant face au boîtier (1), et
le boîtier (1) a des parties d'évidement (13a, 13b) dans lesquelles les saillies de bâti (5c, 6c) sont montées ; et
dans lequel :
le filtre d'air d'alimentation (5) et le filtre d'air de décharge (6) ont chacun une surface d'étanchéité (5d, 6d) faisant face à une plaque latérale (16) du boîtier (1), la plaque latérale (16) étant perpendiculaire à la direction d'empilement et étant opposée à une plaque latérale (18),
une surface de la surface d'étanchéité (5d, 6d) a une poignée (5f, 6f), la surface faisant face à la plaque d'étanchéité (16), et
une surface opposée de la surface d'étanchéité (5d, 6d) a une saillie (5e, 6e), la surface opposée étant opposée à la surface faisant face à la plaque latérale (16),
dans lequel la plaque latérale (18) a une ouverture (18a) et une ouverture (18b) qui sont utilisées en tant qu'orifices pour admettre l'air dans la trajectoire d'air de décharge, dans lequel l'ouverture (18a) est raccordée en amont de l'échangeur de chaleur (2) et l'ouverture (18b) est raccordée en aval de l'échangeur de chaleur (2).

2. Appareil de ventilation de type à échange de chaleur (100) selon la revendication 1, dans lequel la plaque latérale (16) a une ouverture (16a, 16b) pour permettre d'insérer et de retirer le filtre d'air d'alimentation (5) et le filtre d'air de décharge (6).
